# EUROPEAN PATENT SPECIFICATION

(11) **EP 3 496 976 B1**
(45) Date of publication and mention of the grant of the patent: **17.03.2021**
(21) Application number: 17840011.5
(22) Date of filing: 28.07.2017
(51) Int. Cl.: B60R 22/20, B60R 22/00, A44B 11/25, B60R 22/02, B60R 22/18

(54) **TACTICAL-GEAR-ACCOMMODATING SEATBELT SYSTEM AND METHOD**
SICHERHEITSGURTSYSTEM MIT TAKTISCHER GANGANPASSUNG UND VERFAHREN
SYSTÈME ET PROCÉDÉ DE CEINTURE DE SÉCURITÉ RECEVANT UN ÉQUIPEMENT

(30) Priority: 10.08.2016 US 201615232991; 27.06.2017 US 201715634086
(43) Date of publication of application: 19.06.2019
(73) Proprietor: Kennair, Donald Jr., Belle Chasse, LA 70037 (US)
(72) Inventor: Kennair, Donald Jr., Belle Chasse, LA 70037 (US)
(74) Representative: Emde, Eric
(86) International application number: PCT/US2017/044360
(87) International publication number: WO 2018/031257

(56) References cited:
- EP-A2- 1 127 750
- DE-A1- 4 237 627
- US-A- 3 542 426
- US-A- 4 656 700
- US-A1- 2004 195 819
- US-A1- 2011 010 901
- US-A1- 2011 241 391
- US-A1- 2014 230 201
- US-A1- 2014 230 202
- US-A1- 2016 031 411
- US-B2- 8 276 942

## Description

### Background of the Invention

This invention provides a tactical-gear-accommodating seatbelt system and method adapted to provide enhanced safety and easier, more reliable means of engaging and disengaging the seatbelt for persons wearing tactical gear on the waist and chest.

The standard three-point seatbelt presently available in vehicles presents problems to a person wearing tactical gear at the waist and front torso, such as law officers, first responders, and military personnel. Such tactical gear might normally comprise a firearm in a holster, a stun device in a holster, a chemical agent in a spray can in a holster, a radio at the waist with an extension at the upper chest, a body camera, and several pouches to hold gear, supplies, and ammunition, all worn at the same time. In particular, if a person is wearing a holster with a relatively small armament, such as a taser, such an armament is often inadvertently removed from the holster when a standard seatbelt is unhooked and caught on the armament. The person might also be wearing bulky body armor, especially on the upper torso, which provides additional obstacles to the hooking and unhooking of a standard seatbelt. Additionally, persons wearing tactical gear often wear indicia of authority on their chests, such as badges, nametags, or collar pins. These elements often get caught in a standard seatbelt when the standard seatbelt is unhooked, causing the various indicia of authority to be snagged or ripped out completely, which in turn causes damage to the various badges and elements, and costs valuable time to recover in the vehicle.

Such persons are often called upon to enter a vehicle quickly, begin moving quickly, and exit a vehicle quickly, which may sometimes be under difficult or emergency conditions. The standard three-point seatbelt hinders a person's ability to move quickly or effectively when wearing such tactical gear. When entering a vehicle, the standard seat-level receptacle is likely behind and underneath tactical gear on a belt, such as a holster or a radio. The seat-level receptacle is therefore hard to find, hard to reach, and hard to fasten. When exiting a vehicle, the seat-level receptacle is still hard to find, reach, and unfasten, and so the person's exit from the vehicle is delayed. Also, the V-shaped segment formed by the lap and shoulder portions of the three-point seatbelt are highly prone to becoming snagged or caught on one or more pieces of tactical gear. Such snagging also hinders and delays exit from the vehicle. In extreme circumstances, such as the wreck of a vehicle, a person might be trapped in a vehicle unable to unfasten the three-point seatbelt, and be forced to cut the seatbelt in order to get free. Additionally, in a situation where a person might be incapacitated, the seatbelt would have to be unfastened by another person, from either inside or outside the vehicle at a potentially difficult angle.

The current art has not solved the problems created by the above situations. For example, US 3,600,768 A covers a safety belt and buckle construction for vehicles in which lap belt straps or webbing are provided, as well as shoulder strap means. In the apparatus, both the lap webbing and shoulder webbing are attached to the vehicle and remote therefrom, all being connected by buckle means having a plurality of detents to respectively hold the lap belt straps and shoulder strap means in the releasable latched position. In this arrangement, all of the straps may be simultaneously released by a single pushbutton means, or the shoulder strap released without releasing the lap straps.

US 3,523,342 A discloses a latch which covers a buckle latching mechanism formed of a pair of opposing arms having spaced-apart ends pivotally connected to the buckle housing, with opposite ends converting towards and in contact with each other during latching to form a rigid triangle. The apparatus features rollers carried by the adjacent ends, and a belt tongue slidably positioned between the pivots along the axis of the triangle and having socketed edges for rollingly receiving the rollers, thereby latching the tongue to the housing. A slidable wedge separates the arms for rollingly disengaging the rollers from the sockets to unlatch the tongue. The patent was developed because seat belt buckle latching mechanisms, of the type used in automotive vehicle and aircraft safety belts, must be designed to carry substantial applied loads without disengaging or unlatching. Thus, they are normally bulky and formed of heavy, thick materials to carry the required loads. It was thus desirable to be able to deliberately unlatch or release such latching mechanisms, even when under heavy load, with minimal applied forces, such as finger pressure upon a button. However, the size, shape, and heavy frictional forces of conventional latching mechanisms make it extremely difficult to deliberately release the mechanism when under applied load. The Spires system is concerned with a latching mechanism that may be formed of relatively lightweight, thin material, to reduce bulkiness and will readily sustain high applied loads, while at the same time due to low friction construction, that may be easily released by low-releasing pressures even when under heavy load.

US 3,106,004 A discloses a harness which relates to an improved multiple separable fastener device for field use in securing a wounded person to a stretcher, or for automobile drivers for holding them safely in their seats, or the like. The simplified, yet rugged, quick-release device separably fastens the terminal ends of shoulder, crotch, and/or waist straps of a body harness together, wherein each terminal end may be independently entered and individually fastened to the device; however, when required, all the terminal ends fastened to the device may be released quickly and simultaneously. The invention provides a structurally improved multiple, separable fastener device that will release all the body harness termini by the manual depression of an operating button in a direction normal to the top wall of the casing member for the device.

US 8,381,373 B1 provides for a housing assembly for twin latching mechanisms. The housing assembly includes two handles that can be pivoted to separately unlatch two belt connectors. The latching mechanisms are positioned within the housing such that when the handles are pivoted upwardly, their leading edges engage plunger mechanisms associated with the latching mechanisms. By engaging the plunger mechanisms, individual latches are disengaged and the associated belt connectors are ejected. A flange interconnects the two handles such that one or both handles are pivoted, depending upon which handle is lifted by the operator. The housing provides a secure enclosure for the latch mechanisms, and also shields the working components from the environment.

US 8,276,942 B1 discloses a combat vehicle restraint system which accommodates a wide range of soldiers, both with and without battle, arctic, or chemical gear. The restraint system includes lengthened belts and an adjustable buckle position. The belts include loops for locating and grasping the belts, and separate lap and shoulder belts with small narrowing ends to prevent catching on gear. The belts are extendable from Inertial reels, which are calibrated for off-road operation. The buckle engages each belt separately and includes a single action release. The buckle position is easily adjusted using an oversized knob, so a soldier may easily find and adjust buckle length in the dark, wearing heavy gloves, or with muddy, slippery fingers. The latch/unlatch mechanism and associated hardware is an open-frame type to reduce or eliminate effects of mud, dust, water, or other contaminants on operation.

US 7,263,750 A discloses a buckle assembly which serves as a vehicle restraint system where the buckle assembly is adapted to receive a plurality of belt connectors, with the belt connectors being simultaneously released upon moving at least one handle to a release position. In one embodiment of the patent, the apparatus comprises a buckle assembly for attachment to a plurality of flat, plate-like belt connectors, wherein each of the belt connectors includes a latching abutment located adjacent to an upper surface thereof, comprising: (1) a buckle base having a bottom portion and parallel spaced-apart upstanding parallel flanges at least along lateral edges of the bottom portion; (2) at least two spaced-apart latching mechanisms mounted in parallel with respect to each other between the spaced-apart upstanding flanges of the bottom portion, wherein each of the spaced-apart latching mechanisms includes (a) a separate latch pawl that is spaced apart from the other one or more latch pawls, wherein each of the separate latch pawls is independently movable relative to the other one or more latch pawls to a position engaging the latching abutment of one of the belt connectors, and (b) a biasing element urging the latch pawl toward the engaging position; and (3) at least one operating handle movable between positions at which the latch pawls of the latching mechanisms are caused to engage and to disengage connection between the buckle and the belt connectors, the operating handle being configured to serve as a top cover plate for the buckle assembly.

US 7,753,410 A covers a tactical quick release seatbelt mechanism that attaches as an after-market enhancement to a pre-existing factor installed seatbelt. The tactical quick release seatbelt mechanism expedites exit from a factory-installed three-point seatbelt, particularly in an emergency situation. The tactical quick release allows tactical users such as law enforcement, military personnel, drug enforcement personnel, Homeland Security personnel, etc., to exit a vehicle quickly, without delay or snag of tactical equipment (e.g., weapons, communications backpack, etc.) on the three-point seatbelt, and without the need to take their eye off a given target by looking down for the seatbelt release button. The quick release mechanism inherently provides some extension to the length of the factory installed seatbelt, providing that much more flexibility and maneuverability for the occupant - particularly an occupant that is forward-leaning in the seat because of their wearing a backpack or similar tactical equipment while seated in the vehicle.

US 8,590,935 B1 includes an electrically-released buckle which engages a shoulder belt and a lap belt. When engaged, the system provides the protection and functionality of a common three-point seatbelt. When a user opens a vehicle door, an electric switch within the door handle provides a single to disengage the buckle, causing both the shoulder and lap belts to retract. The system thus enables the user to exit the vehicle in an expedient manner. The system is particularly useful for law enforcement officers or military personnel who need to frequently and quickly exit a vehicle. A power switch is provided to deactivate the system.

US 2011/0241391 A1 discloses a seat for supporting an occupant of a vehicle and absorbing a force between the occupant and the vehicle created by relative movement between the occupant and the vehicle including a seat bottom and a seat back extending from the seat bottom. At least one of the seat bottom and the seat back includes a first energy absorbing device for absorbing at least a portion of the force when the force reaches a first magnitude. The one of the seat bottom and the seat back also includes a second energy absorbing device for absorbing at least a portion of the force when the force reaches a second magnitude greater than the first magnitude. The second energy absorbing device supports the first energy absorbing device so that the first energy absorbing device transmits a portion of the force to the second energy absorbing device when the force reaches the second magnitude. Also shown is a five-point seatbelt having two lap belts, a lower center belt, and two shoulder belts, all attached to a central buckle. The seatbelt is self-contained on the seat, i. e. anchored to the seat.

DE 42 37 627 A1 discloses a vehicle occupant restraint which has a lap belt and a shoulder belt, with a locking member made up of an anchor section, a first tongue and a second tongue. The first tongue is movable in a passage in a first seat belt buckle and has an opening for a locking element; the second tongue is movable in a passage in a further buckle and has a second opening for a locking element.

There is accordingly a need for a system that solves the problems of a person wearing tactical gear, having difficulty and therefore delay in reaching a standard seat-level receptacle to engage or disengage a standard three-point seatbelt.

### Summary of the Invention

This invention provides a tactical-gear-accommodating seatbelt system and method as set forth in the independent claims 1, 7, 13, and 14, respectively. Preferred embodiments of the present invention may be gathered from the dependent claims. The tactical-gear-accommodating seatbelt system and method is adapted to provide enhanced safety and easier, more reliable means of engaging and disengaging the seatbelt for persons wearing tactical gear on the waist and chest, by providing an extender unit having an extender strap coupled with and extending from the standard seat-level receptacle or anchored in lieu of the standard seat-level receptacle, and a sure-release receptacle attached to the free end of the extender strap such that the double receptacle sits generally in front of the lower torso in use, and having receptacle fittings to accommodate separate lap and shoulder straps anchored at lower and upper anchor points, respectively, with free ends terminated in buckle tabs or plug fittings, thereby allowing easier and safer engagement and disengagement of the seatbelt system for a person wearing tactical gear.

This invention solves the problems of a person wearing tactical gear, having difficulty and therefore delay in reaching a standard seat-level receptacle to engage or disengage a standard three-point seatbelt, and the problems of a standard three-point seatbelt becoming caught upon the tactical gear, which impedes egress from the vehicle.

### Brief Description of Drawings

Reference will now be made to the drawings, wherein like parts are designated by like numerals, and wherein:
FIG. 1 is a right-front perspective conceptual view of the tactical-gear-accommodating seatbelt system and method of the invention in relation to an empty seat;
FIG. 2 is a left-front perspective view of the standard three-point seatbelt of the prior art, in use by a person wearing tactical gear;
FIG. 3 is a left-front perspective view of an embodiment of the tactical-gear-accommodating seatbelt system and method of the invention, in use by a person wearing tactical gear;
FIG. 4 is a top-front perspective view of an embodiment of the tactical-gear-accommodating seatbelt system and method of the invention, in use by a person wearing tactical gear;
FIG. 5 is a top-front perspective view of an embodiment of the tactical-gear-accommodating seatbelt system and method of the invention, in use by a person wearing tactical gear;
FIG. 6 is a front view of a kit, retrofit embodiment of the tactical-gear-accommodating seatbelt system and method of the invention;
FIG. 7 is a left-front perspective conceptual view of a kit, retrofit embodiment of the tactical-gear accommodating seatbelt system and method of the invention in relation to an empty seat;
FIG. 8 is a front detail view of an embodiment of the sure-release receptacle and the extender strap of the invention;
FIG. 9 is a conceptual perspective detail view of different buckle tabs on extender straps suitable for various existing seat-level buckle receptacles;
FIG. 10 is a conceptual view of the tactical-gear-accommodating seatbelt system and method of the invention being manipulated by a person's hand;
FIG. 11 is a front detail view of an embodiment of the invention having a butterfly spinner release and a built-in extender strap;
FIG. 12 is a front detail view of an embodiment of the invention having both a trigger release and a thumb release;
FIG. 13 is a front detail view of an embodiment of the invention having a thumb release;
FIG. 14 is a cutaway view of an embodiment of the invention having a webbed strap with a buckle tab as the extender strap;
FIG. 15 is a cutaway view of an embodiment of the invention having a cable as the extender strap;
FIG. 16 is a front view of an embodiment of the cover of the sure-release receptacle of the invention for driver-side and passenger-side seats;
FIG. 17 is a cutaway view of a three-point embodiment of the sure-release receptacle of the invention for driver-side and passenger-side seats;
FIG. 18 is a cutaway view of a two-point embodiment of the sure-release receptacle of the invention for driver-side and passenger-side seats;
FIG. 19 is a cutaway view of an alternative three-point embodiment of the sure-release receptacle of the invention for driver-side and passenger-side seats;
FIG. 20 is a cutaway view of a four-point embodiment of the sure-release receptacle of the invention for driver-side and passenger-side seats; and FIG. 21 is a cutaway view of a five-point embodiment of the sure-release receptacle of the invention for driver-side and passenger-side seats.

### Detailed Description of the Invention

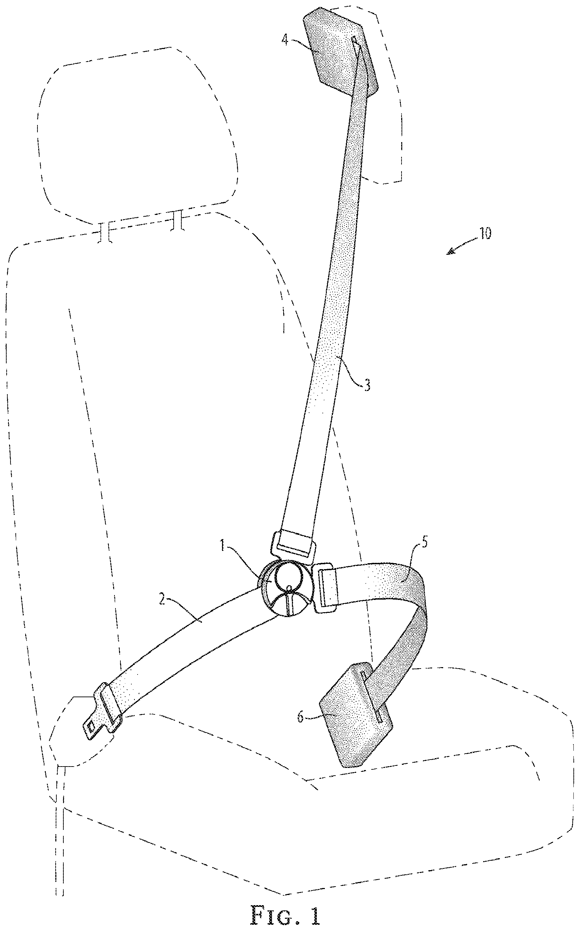

Referring to FIG. 1 and all figures generally, embodiments of the tactical-gear-accommodating seatbelt system and method 10 of the invention are illustrated.

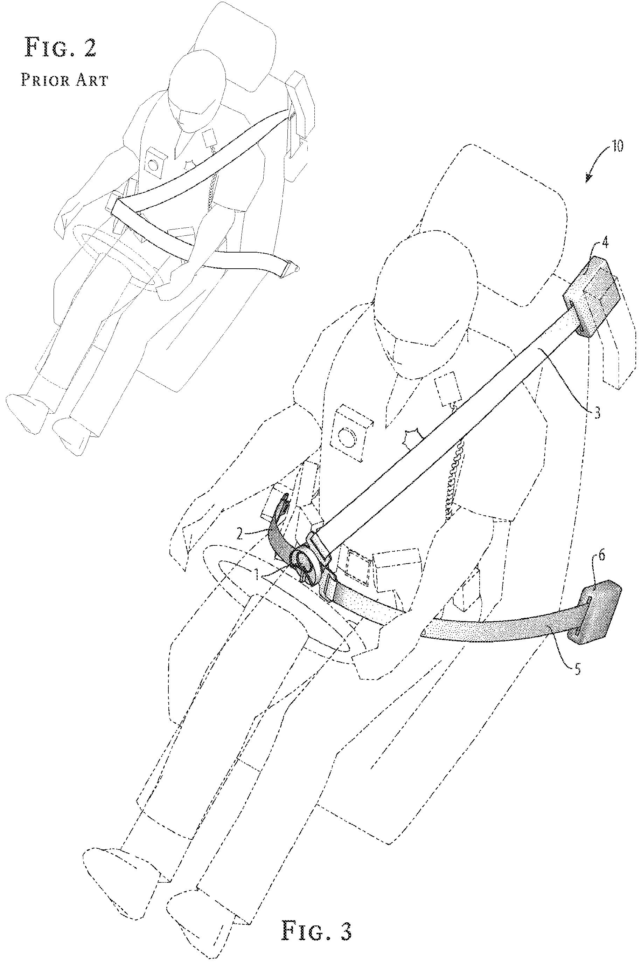

Referring briefly to prior art FIG. 2, the standard three-point seatbelt, when used by a person wearing tactical gear on the waist and chest, has a disadvantage in that the standard seat-level receptacle is difficult to locate, reach, and manipulate with tactical gear, which may include a pistol holster for right-handed persons, or an electroshock weapon or radio transceiver for a left-handed person. This problem can lead to delays in getting a vehicle underway and delays in persons being able to exit a vehicle quickly when responding to a situation. The difficulty in locating, reaching, and manipulating this standard seatbelt could also possibly trap a person in a vehicle when unable to release the three-point seatbelt. A related problem is the tendency of the one-piece, three-point seatbelt to become caught or snagged upon one or more protruding pieces of tactical gear.

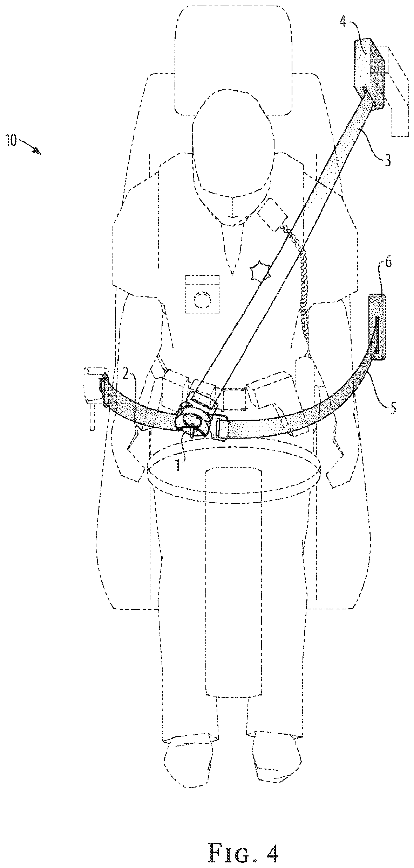

Referring to FIG. 1, FIG. 3, & FIG. 4, the tactical-gear-accommodating seatbelt system and method 10 provides an extender unit made up of a sure-release receptacle 1 attached to one end of an extender strap 2. The extender strap 2 is anchored to the vehicle frame or chassis by either directly attaching, replacing the standard seat-level receptacle, for some embodiments, or by attaching to the existing standard seat-level receptacle for other embodiments, such as a retrofit embodiment.

Taking the place of the lap and shoulder portions of the one-strap standard three-point seatbelt are a separate shoulder strap, anchored at a point generally equivalent to the point where a three-point seatbelt would change directions at an anchored point, which is generally at shoulder level, and a separate lap strap, anchored at a point generally equivalent to the anchor point of a standard seatbelt, which is generally at floor level. The shoulder strap anchor unit 4 and the lap strap anchor unit 6 can be provided with a locking retractor, pretensioner, or web clamp, as known in the art.

The ends of the shoulder strap 3 and lap strap 5 opposite their respective anchor points are provided with buckle tabs or plug fittings which securely and removably attach to the sure-release receptacle 1. In use, the sure-release receptacle 1 sits at a point along the line of the lap belt that is essentially in front of the person's lower torso. This frontal location of the sure-release receptacle, as well as the flexibility of the extender strap 2, make the extender unit easy to find by sight or by feel, allowing for easier and quicker engagement and disengagement of the seatbelt. The sure-release receptacle 1 is adapted to provide a secure attachment which will not jam or seize up, even after application of force, such as from a wreck. In a preferred embodiment, the sure-release receptacle 1 has a rotary, partial-turn release control of a size large enough to be manipulated both by the hand of the person wearing the seatbelt, or by a different person either inside or outside the vehicle. In a preferred embodiment, the sure-release receptacle 1 is provided internally with one or more cams or pawls to provide a securing of the buckle tabs of the shoulder strap 3 and the lap strap 5 that will withstand the force of a wreck, but will not jam, and can be released under all circumstances.

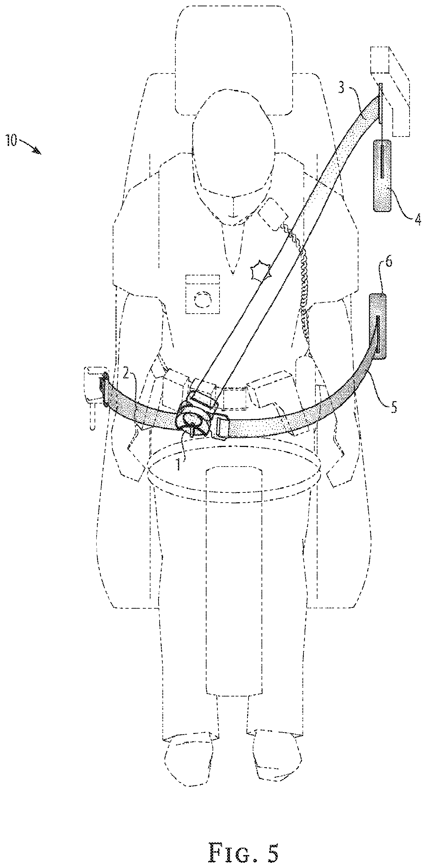

Referring to FIG. 5, the shoulder strap anchor unit 4 can be located at a place other than the actual effective anchor point, and can be passed through a fitting that allows a change of direction of the strap. Such an arrangement is especially useful when the invention is implemented as a retrofit, because the existing anchor and retractor for the standard three-point seatbelt can be utilized, with only a cutting of the shoulder strap at the proper place and secure attachment of a buckle tab. A simple retrofit can be made by providing an extender unit with an extender strap 2 that fits into a standard seat-level receptacle, by cutting the single strap of the three-point seatbelt at the proper location, by attaching a buckle tab to each cut end of the strap, by leaving the lap strap anchor unit 6 as a simple anchor point, and by re-using the existing locking retractor, pretensioner, or web clamp for operation upon the shoulder strap 3. In such a retrofit, with no retractor at the lap strap anchor point 6, means should be provided for adjusting the length of the lap strap 5.

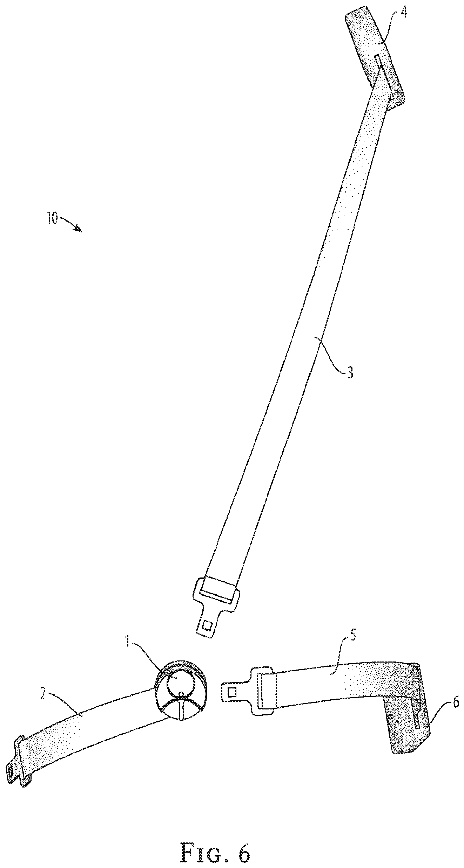

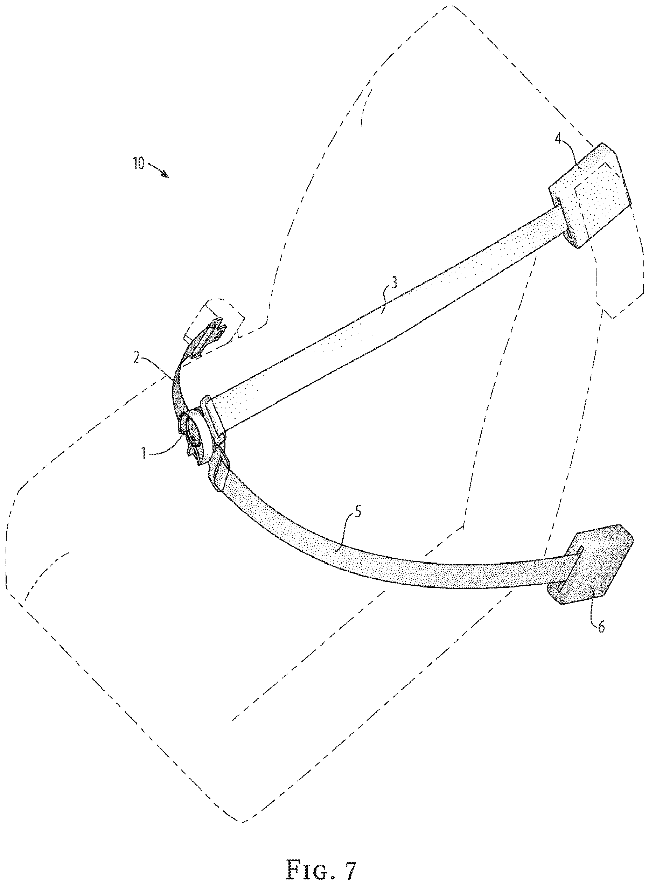

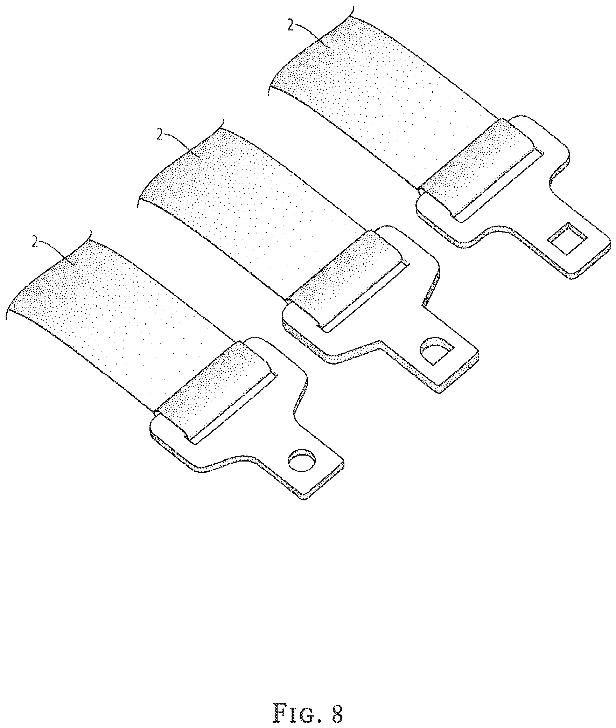

Referring to FIG. 6 & FIG. 7, an embodiment of the tactical-gear-accommodating seatbelt system can be provided as a kit for implementing the retrofit into existing vehicles. In the case of such a kit, the extender strap 2 is attached at its end opposite the sure-release receptacle 1 to the vehicle's existing seat-level receptacle. Referring additionally to FIG. 8, it is noted that among vehicle manufacturers there are slight variations of the size, shape, and placement of the hole in the buckle tab. Accordingly, a retrofit kit embodiment of the tactical-gear-accommodating seatbelt system will either need to be provided with a variety of buckle tabs, or will need to be provided in various versions, each with a buckle tab matched to specific vehicle manufacturers.

In a retrofit kit embodiment, a shoulder strap anchor unit 4 containing a shoulder strap 3 is provided to be attached generally at shoulder level, usually to the body of the vehicle, and sometimes to the seat itself. A lap strap anchor unit 6 containing a lap strap 5 is provided to be attached generally at the floor level of the vehicle, again usually to the body of the vehicle, and sometimes to the seat itself. Such a retrofit kit embodiment of the tactical-gear-accommodating seatbelt system could be installed in a fleet of vehicles during initial fitting of newly purchased vehicles or during scheduled maintenance, retrofitting, or refurbishment of existing vehicles.

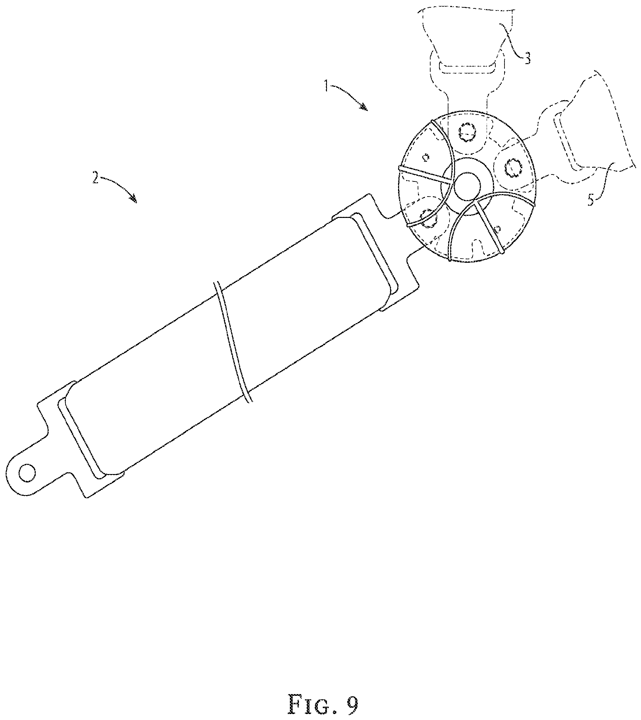

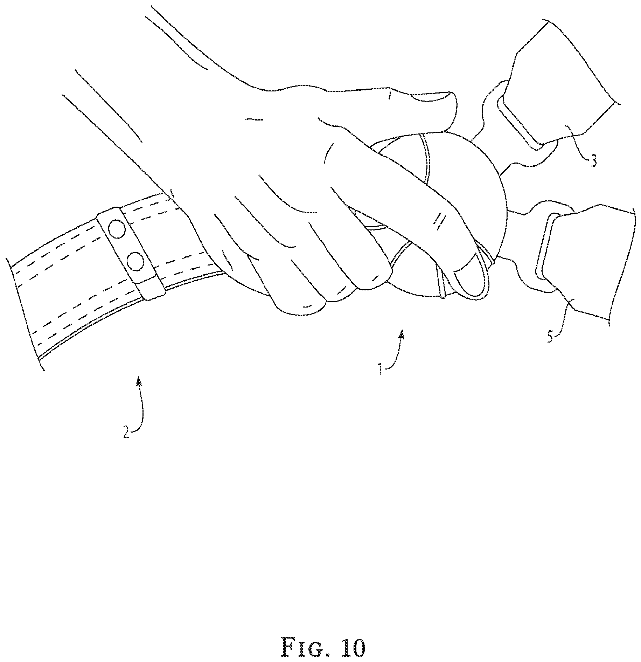

Referring to FIG. 9 & FIG. 10, the sure-release receptacle 1 is coupled with the extender strap 2 in a generally permanent or non-removable attachment, and is designed to be removably coupled with the buckle tabs of the shoulder strap 3 and the lap strap 5. The sure-release receptacle 1 needs to be easy to find and to operate both by the occupant of the seat or, in an emergency, by another person inside or outside of the vehicle, and possibly with the vehicle in an unusual location or position. The extender strap 2 can be stiffened by, for example, the addition of a leather covering or an additional layer of plastic, which will tend to hold the sure-release receptacle 1 up and away from the crease between the back and bottom of the seat, so that it remains in an expected position whether in use or not.

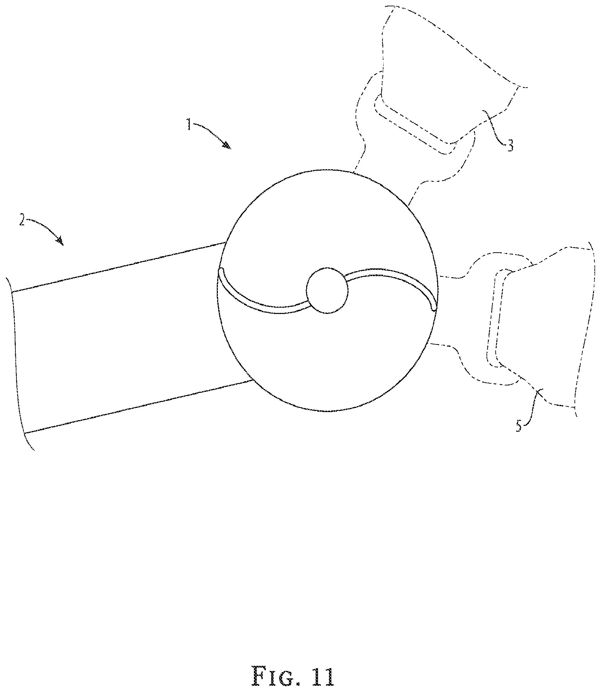

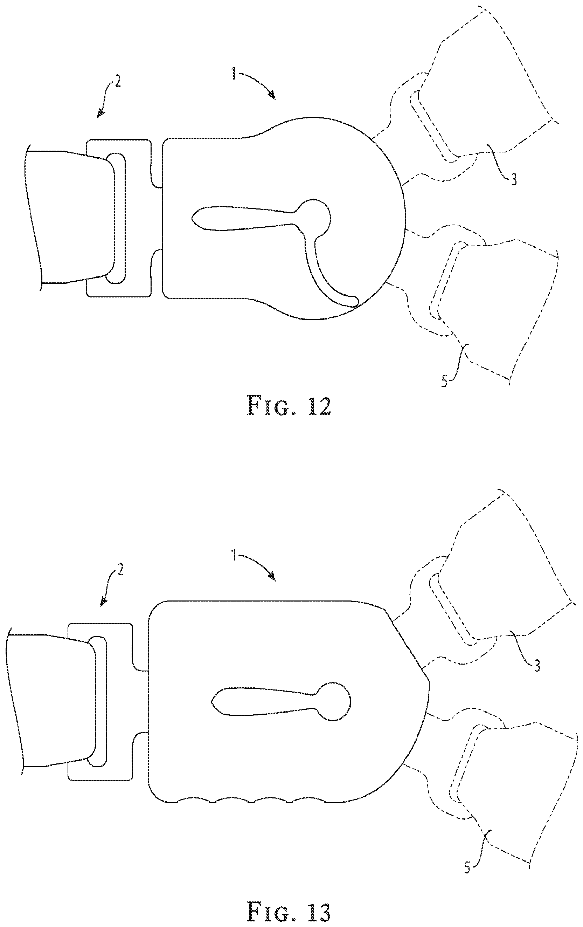

Referring additionally to FIG. 11, FIG. 12, & FIG. 13, the sure-release receptacle 1 should be designed to be closed, capturing the shoulder strap 3 and lap strap 5, by a partial turn of the front of the receptacle, and then remain closed, and to be opened, releasing the shoulder strap 3 and lap strap 5, by a partial turn of the front of the receptacle, and then remain open. The circumference of the front of the receptacle can be grooved or knurled in order to improve gripping and turning, and the front of the receptacle can be provided with grip-improving protrusions such as the illustrated butterfly spinner, thumb lever, and trigger lever. Such protrusions also give both a visible and a tactile indication of the open or closed state of the sure-release receptacle 1. Such protrusions can be painted in red or in a contrasting color in order to increase visibility, especially in circumstances where a person outside the vehicle is trying to extricate an occupant. The simple lock-and-stay-locked and open-and-stay-open operation of the sure-release receptacle 1 is also of benefit under such circumstances.

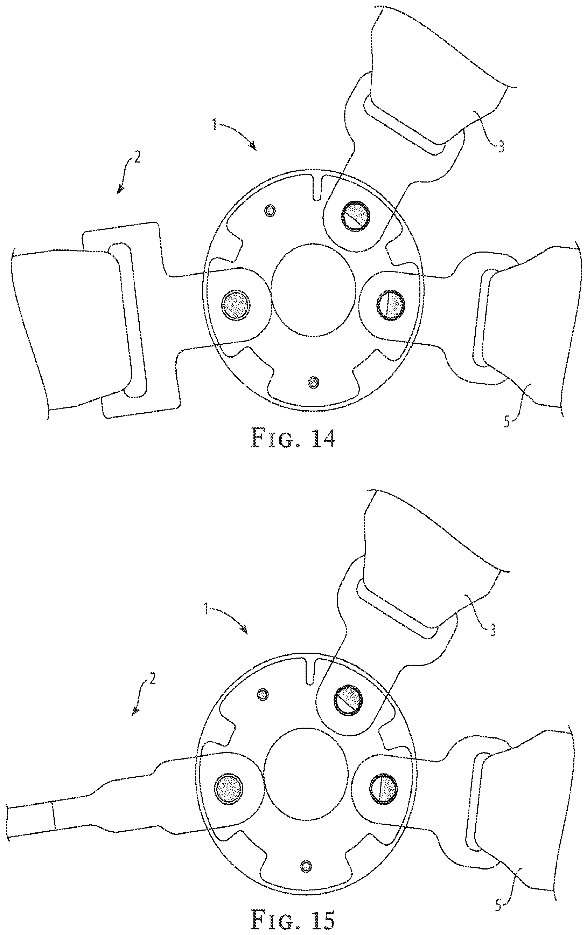

Referring to FIG. 14 & FIG. 15, the extender strap 2 can be a standard webbed strap terminated in a buckle tab to be captured by the sure-release receptacle 1, or can be a cable with an integrated connector to be captured by the sure-release receptacle 1. The capturing of the buckle tab or integrated connector is done with a pin in the illustrated embodiments. This coupling is not meant to be uncoupled during the normal operation of the system. Both the webbed strap and the cable can be covered with a material such as leather.

In preferred embodiments of the tactical-gear-accommodating seatbelt system, the sure-release receptacle 1 is operated by a central cam mechanism raising and lowering pins to engage the buckle tabs of the shoulder strap 3 and the lap strap 5. Optionally, the pins can be configured to allow the one-way insertion of buckle tabs while the sure-release receptacle 1 is closed. In the alternative, the sure-release receptacle 1 may be operated by a central cam mechanism in conjunction with a spring or springs to control release of the buckle, as is known in the art.

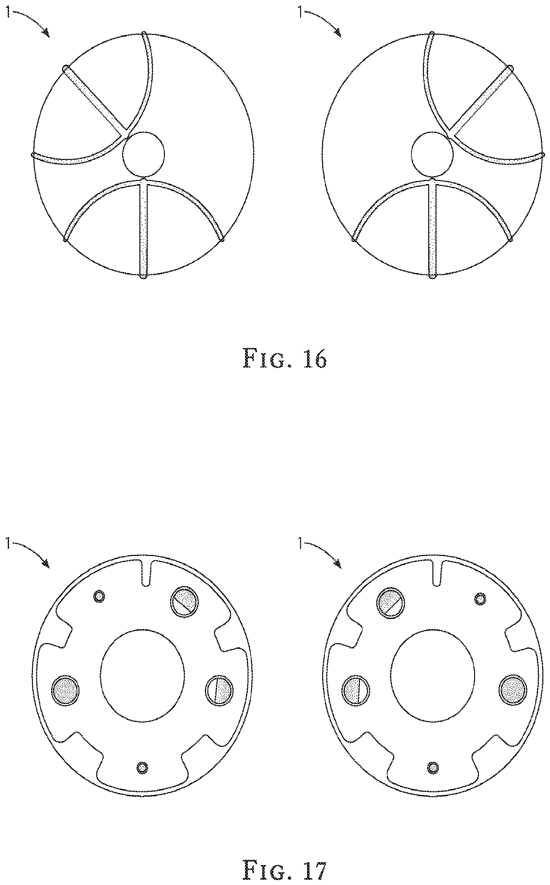

Referring to FIG. 16 & FIG. 17, the nominally left-side and right-side seats of a vehicle require a bilaterally asymmetrical arrangement of the controls and mechanisms of the sure-release receptacle 1, and mirror-image versions for the appropriate side.

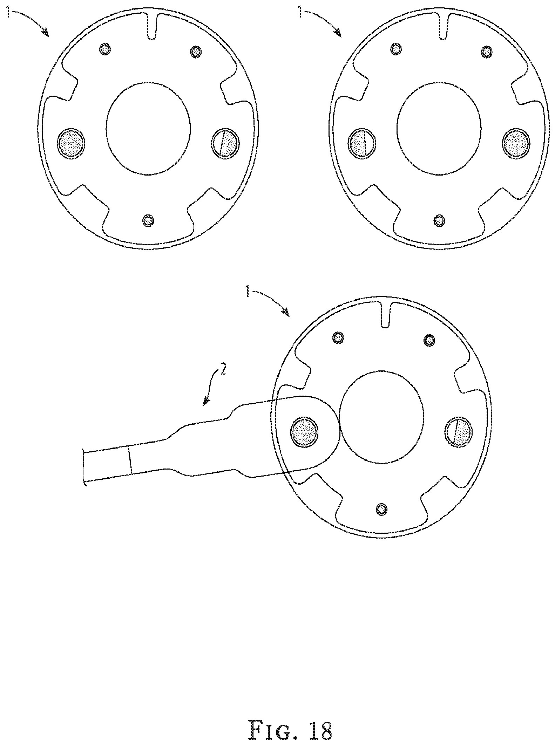

Referring to FIG. 18, the sure-release receptacle 1 can be provided in an embodiment configured for an always-connected extender strap 2 and just one attachable and removable buckle tab, which in turn might be attached to just one or two more belts.

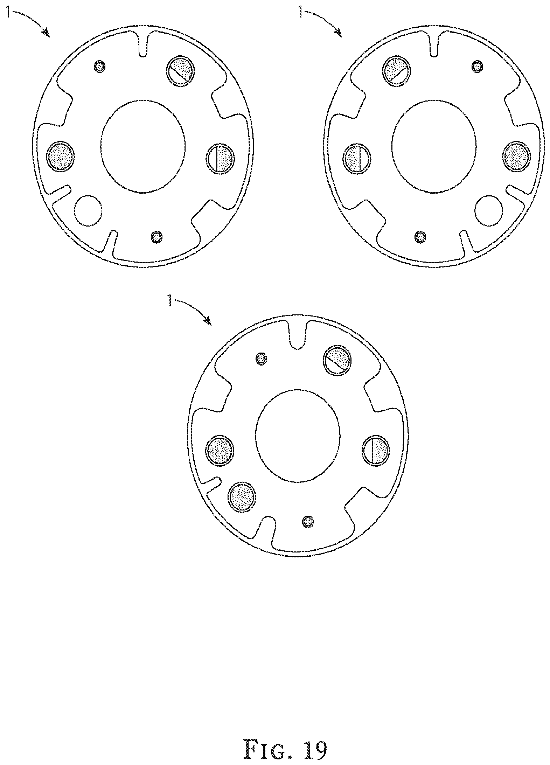

Referring to FIG. 19, the sure-release receptacle 1 can be provided in an embodiment configured for the attachment of two extender straps or the attachment of one extender strap 2 at two points.

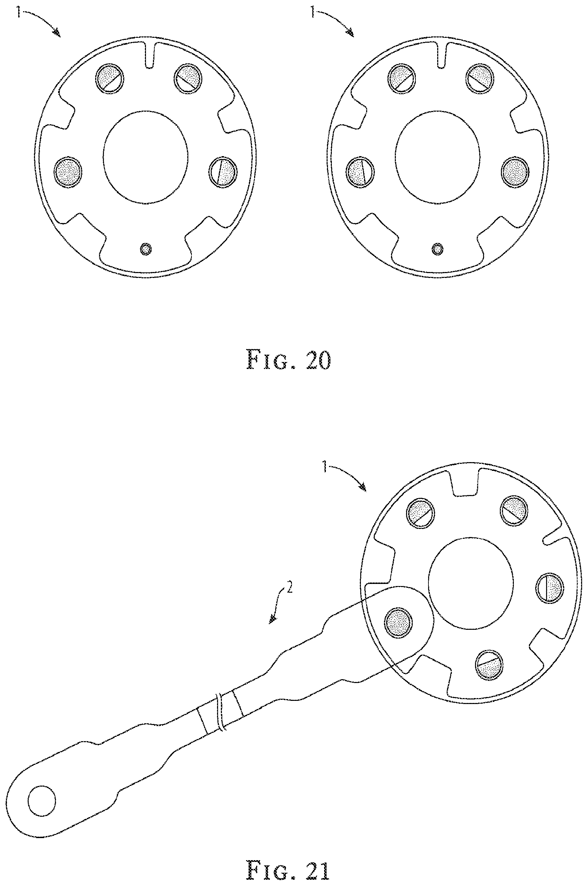

Referring to FIG. 20, the sure-release receptacle 1 can be provided in an embodiment configured for the attachment of an always-connected extender strap plus three attachable and removable buckle tabs, providing a four-point system.

Referring to FIG. 21, the sure-release receptacle 1 can be provided in an embodiment configured for the attachment of an always-connected extender strap plus four attachable and removable buckle tabs, providing a five-point system.

## Claims

1. A tactical-gear-accommodating seatbelt system apparatus (10) for use in a vehicle by a person wearing tactical gear upon waist and front torso, said tactical-gear-accommodating seatbelt system (10) comprising:
(i) an extender strap (2) adapted to be ultimately anchored at a first end to a floor of the vehicle through or in place of a standard seat-level receptacle;
(ii) a sure-release receptacle (1) non-slidably attached to a second end of said extender strap (2) and having two receptacle fittings;
(iii) a shoulder strap (3) having at a first end an anchor point (4) adapted to be anchored approximately at shoulder level and behind the person, and at a second end a buckle tab; and
(iv) a lap strap (5) having at a first end an anchor point (6) adapted to be anchored approximately at floor level of the vehicle and behind the person, and at a second end a buckle tab;
wherein said sure-release receptacle (1) is adapted to couple and uncouple with the buckle tabs of said shoulder strap (3) and said lap strap (5) such that the coupling will hold securely under strain and will freely uncouple after such strain;
wherein said extender strap (2) has sufficient longitudinal aspect such that the sure-release receptacle (1), in use, is located toward the center front of the person's lower torso, and is easy to find by sight or feel, and easy to manipulate for coupling or uncoupling;
wherein the uncoupling of the buckle tabs of said shoulder strap (3) and said lap strap (5) from said sure-release receptacle (1) allows said shoulder strap (3) and said lap strap (5) to be retracted separately and independently each of the other, thereby avoiding catching on the tactical gear; and
wherein said sure-release receptacle (1) further comprises a rotary partial-turn release control, an internal coupling and uncoupling mechanism having at least one centrally-located cam, or an internal coupling and uncoupling mechanism having at least one pawl.

2. The tactical-gear-accommodating seatbelt system apparatus of claim 1, further adapted to be implemented as an original seatbelt installed in a new vehicle.

3. The tactical-gear-accommodating seatbelt system apparatus of claim 1, further adapted to be implemented as a retrofit placement for an existing standard three-point seatbelt.

4. The tactical-gear-accommodating seatbelt system apparatus of claim 1, wherein said extender strap (2) is adapted to be anchored directly to the floor of the vehicle.

5. The tactical-gear-accommodating seatbelt system apparatus of claim 1, wherein said extender strap (2) is adapted to be attached to a standard seat-level receptacle that is in turn anchored to the floor of the vehicle.

6. The tactical-gear-accommodating seatbelt system apparatus of claim 1, further comprising providing a locking retractor, pretensioner, or web clamp on said shoulder strap (3) or on said lap strap (5).

7. A tactical-gear-accommodating seatbelt method for use in a vehicle by a person wearing tactical gear upon waist and front torso, said tactical-gear-accommodating seatbelt method comprising:
(i) providing a tactical-gear-accommodating seatbelt system (10) comprising:
(a) an extender strap (2) adapted to be ultimately anchored at a first end to a floor of the vehicle through or in place of a standard seat-level receptacle;
(b) a sure-release receptacle (1) non-slidably attached to a second end of said extender strap (2) and having two receptacle fittings;
(c) a shoulder strap (3) having at a first end an anchor point (4) adapted to be anchored approximately at shoulder level and behind the person, and at a second end a buckle tab; and
(d) a lap strap (5) having at a first end an anchor point (6) adapted to be anchored approximately at floor level of the vehicle and behind the person, and at a second end a buckle tab;
wherein said sure-release receptacle (1) is adapted to couple and uncouple with the buckle tabs of said shoulder strap (3) and said lap strap (5) such that the coupling will hold securely under strain and will freely uncouple after such strain; wherein said extender strap (2) has sufficient longitudinal aspect such that the sure-release receptacle (1), in use, is located toward the center front of the person's lower torso, and is easy to find by sight or feel, and easy to manipulate for coupling or uncoupling;
wherein the coupling of the buckle tabs of said shoulder strap (3) and said lap strap (5) from said sure-release receptacle (1) allows said shoulder strap (3) and said lap strap (5) to be retracted separately and independently each of the other, thereby avoiding catching on the tactical gear; and
wherein said sure-release receptacle (1) further comprises a rotary partial-turn release control, an internal coupling and uncoupling mechanism having at least one centrally-located cam, or an internal coupling and uncoupling mechanism having at least one pawl;
(ii) installing said tactical-gear-accommodating seatbelt system (10) in a vehicle; and
(iii) utilizing said tactical-gear-accommodating seatbelt system (10) with the sure-release receptacle (1) positioned toward the center front of the person's lower torso.

8. The tactical-gear-accommodating seatbelt system method of claim 7, wherein said tactical-gear-accommodating seatbelt system (10) is further adapted to be implemented as an original seatbelt installed in a new vehicle.

9. The tactical-gear-accommodating seatbelt system method of claim 7, wherein said tactical-gear-accommodating seatbelt system (10) is further adapted to be implemented as a retrofit replacement for an existing standard three-point seatbelt.

10. The tactical-gear-accommodating seatbelt system method of claim 7, wherein said extender strap (2) is adapted to be anchored directly to the floor of the vehicle.

11. The tactical-gear-accommodating seatbelt system method of claim 7, wherein said extender strap (2) is adapted to be attached to a standard seat-level receptacle that is in turn anchored to the floor of the vehicle.

12. The tactical-gear-accommodating seatbelt system method of claim 7, where said tactical-gear-accommodating seatbelt system (10) further comprises providing a locking retractor, pretensioner, or web clamp on said shoulder strap (3) or on said lap strap (5).

13. A tactical-gear-accommodating seatbelt system apparatus (10) for use in a vehicle by a person wearing tactical gear upon waist and front torso, said tactical-gear-accommodating seatbelt system (10) comprising:
(i) an extender strap (2) adapted to be ultimately anchored at a first end to a floor of the vehicle through or in place of a standard seat-level receptacle;
(ii) a sure-release double receptacle (1) non-slidably attached to a second end of said extender strap (2) and having two receptacle fittings;
(iii) a shoulder strap (3) having at a first end an anchor point (4) adapted to be anchored approximately at shoulder level and behind the person, and at a second end a plug fitting; and
(iv) a lap strap (5) having at a first end an anchor point (6) adapted to be anchored approximately at floor level of the vehicle and behind the person, and at a second end a plug fitting;
wherein said sure-release double receptacle (1) is adapted to couple and uncouple with the plug fittings of said shoulder strap (3) and said lap strap (5) such that the coupling will hold securely under strain and will freely uncouple after such strain;
wherein said extender strap (2) has sufficient longitudinal aspect such that the sure-release double receptacle (1), in use, is located away from a person's hip area and toward the center front of the person's lower torso, and is easy to find by sight or feel, and easy to manipulate for coupling or uncoupling; and
wherein the uncoupling of the plug fittings of said shoulder strap (3) and said lap strap (5) from said sure-release double receptacle (1) allows said shoulder strap (3) and said lap strap (5) to be retracted separately and independently each of the other, thereby avoiding catching on the tactical gear; and
wherein said sure-release double receptacle (1) further comprises a rotary partial-turn release control, an internal coupling and uncoupling mechanism having at least one centrally-located cam, or an internal coupling and uncoupling mechanism having at least one pawl.

14. A tactical-gear-accommodating seatbelt system method for use in a vehicle by a person wearing tactical gear upon waist and front torso, said tactical-gear-accommodating seatbelt system method comprising:
(i) providing a tactical-gear-accommodating seatbelt system (10) comprising:
(a) an extender strap (2) adapted to be ultimately anchored at a first end to the floor of the vehicle through or in place of a standard seat-level receptacle;
(b) a sure-release double receptacle (1) non-slidably attached to a second end of said extender strap (2) and having two receptacle fittings;
(c) a shoulder strap (3) having at a first end an anchor point (4) adapted to be anchored approximately at shoulder level and behind the person, and at a second end a plug fitting; and
(d) a lap strap (5) having at a first end an anchor point (6) adapted to be anchored approximately at floor level of the vehicle and behind the person, and at a second end a plug fitting;
wherein said sure-release double receptacle (1) is adapted to couple and uncouple with the plug fittings of said shoulder strap (3) and said lap strap (5) such that the coupling will hold securely under strain and will freely uncouple after such strain; wherein said extender strap (2) has sufficient longitudinal aspect such that the sure-release double receptacle (1), in use, is located away from a person's hip area and toward the center front of the person's lower torso, and is easy to find by sight or feel, and easy to manipulate for coupling or uncoupling;
wherein the coupling of the plug fittings of said shoulder strap (3) and said lap strap (5) from said sure-release double receptacle (1) allows said shoulder strap (3) and said lap strap (5) to be retracted separately and independently each of the other, thereby avoiding catching on the tactical gear; and
wherein said sure-release double receptacle (1) further comprises a rotary partial-turn release control, an internal coupling and uncoupling mechanism having at least one centrally-located cam, or an internal coupling and uncoupling mechanism having at least one pawl;
(ii) installing said tactical-gear-accommodating seatbelt system (10) in a vehicle; and
(iii) utilizing said tactical-gear-accommodating seatbelt system (10) with the sure-release double receptacle (1) positioned toward the center front of the person's lower torso.

## Patentansprüche

1. Einrichtung eines Sitzgurtsystems (10) zur Anpassung an eine taktische Ausrüstung zur Verwendung in einem Fahrzeug durch eine Person, die eine taktische Ausrüstung an der Hüfte und am vorderen Rumpf trägt, wobei das Sicherheitsgurt- bzw. Sitzgurtsystem (10) zur Anpassung an eine taktische Ausrüstung Folgendes aufweist:
(i) einen Verlängerungsgurt (2), der ausgebildet ist, um letztendlich an einem ersten Ende an einem Boden des Fahrzeugs durch einen üblichen auf Sitzniveau befindlichen Aufnehmer oder anstelle von diesem verankert zu werden;
(ii) einen Sicherung-Freigabe-Aufnehmer (1), der nicht verschiebbar an einem zweiten Ende des Verlängerungsgurtes (2) angebracht ist und zwei Aufnehmeranschlüsse hat;
(iii) einen Schultergurt (3), der an einem ersten Ende einen Ankerpunkt (4) hat, der ausgebildet ist, um in geeigneter Weise auf einem Schulterniveau und hinter der Person verankert zu werden, und der an einem zweiten Ende eine Stecklasche hat; und
(iv) einen Beckengurt (5), der an einem ersten Ende einen Ankerpunkt (6) hat, der ausgebildet ist, um in geeigneter Weise auf einem Bodenniveau des Fahrzeugs und hinter der Person verankert zu werden, und der an einem zweiten Ende eine Stecklasche hat;
wobei der Sicherung-Freigabe-Aufnehmer (1) ausgebildet ist, um mit den Stecklaschen des Schultergurtes (3) und des Beckengurtes (5) eine Koppelung und eine Entkoppelung auszuführen, so dass die Koppelung unter Zugbelastung sicher halten wird und nach einer solchen Zugbelastung frei entkoppeln wird;
wobei der Verlängerungsgurt (2) ein ausreichendes Längenverhältnis hat, so dass der Sicherung-Freigabe-Aufnehmer (1) beim Gebrauch zur mittleren Front des unteren Rumpfes der Person hin angeordnet ist, und durch Sehen oder Fühlen leicht zu finden ist und zum Koppeln oder Entkoppeln leicht zu betätigten ist.;
wobei das Entkoppeln der Stecklaschen des Schultergurtes (3) und des Beckengurtes (5) aus dem Sicherung-Freigabe-Aufnehmer (1) gestattet, dass der Schultergurt (3) und der Beckengurt (5) separat und unabhängig voneinander zurückgezogen werden, wodurch ein Verfangen der taktischen Ausrüstung vermieden wird; und
wobei der Sicherung-Freigabe-Aufnehmer (1) weiter eine drehbare Freigabesteuerung mit Teildrehung, einen internen Koppelungs- und Entkoppelungsmechanismus mit mindestens einem mittig angeordnetem Nocken oder einen internen Koppelungs- und Entkoppelungsmechanismus mit mindestens einer Klinke aufweist.

2. Einrichtung eines Sitzgurtsystems zur Anpassung an eine taktische Ausrüstung nach Anspruch 1, die weiter ausgebildet ist, um als ein Original-Sitzgurt ausgeführt zu werden, der in einem Neufahrzeug installiert ist.

3. Einrichtung eines Sitzgurtsystems zur Anpassung an eine taktische Ausrüstung nach Anspruch 1, die weiter ausgebildet ist, um als Nachrüstung für einen existierenden Standard-Dreipunkt-Sitzgurt ausgeführt zu werden.

4. Einrichtung eines Sitzgurtsystems zur Anpassung an eine taktische Ausrüstung nach Anspruch 1, wobei der Verlängerungsgurt (2) ausgebildet ist, um direkt an dem Boden des Fahrzeugs verankert zu werden.

5. Einrichtung eines Sitzgurtsystems zur Anpassung an eine taktische Ausrüstung nach Anspruch 1, wobei der Verlängerungsgurt (2) ausgebildet ist, um an einem Standard-Aufnehmer auf Sitzniveau angebracht zu werden, der wiederum am Boden des Fahrzeugs verankert ist.

6. Einrichtung eines Sitzgurtsystems zur Anpassung an eine taktische Ausrüstung nach Anspruch 1, die weiter aufweist, eine Verriegelungsrückzugsvorrichtung, einen Vorspanner oder eine Gewebeklemme an dem Schultergurt (3) oder an dem Beckengurt (5) vorzusehen.

7. Verfahren für einen Sitzgurt zur Anpassung an eine taktische Ausrüstung zur Verwendung in einem Fahrzeug durch eine Person, die eine taktische Ausrüstung an Hüfte und vorderem Rumpf trägt, wobei das Verfahren für einen Sicherheits- bzw. Sitzgurt zur Anpassung an eine taktische Ausrüstung Folgendes aufweist:
(i) Vorsehen eines Sitzgurtsystems (10) zur Anpassung an eine taktische Ausrüstung, die Folgendes aufweist:
(a) einen Verlängerungsgurt (2), der ausgebildet ist, um letztendlich an einem ersten Ende an einem Boden des Fahrzeugs durch einen üblichen auf Sitzniveau befindlichen Aufnehmer oder anstelle von diesem verankert zu werden;
(b) einen Sicherung-Freigabe-Aufnehmer (1), der nicht verschiebbar an einem zweiten Ende des Verlängerungsgurtes (2) angebracht ist und zwei Aufnehmeranschlüsse hat;
(c) einen Schultergurt (3), der an einem ersten Ende einen Ankerpunkt (4) hat, der ausgebildet ist, um in geeigneter Weise auf einem Schulterniveau und hinter der Person verankert zu werden, und der an einem zweiten Ende eine Stecklasche hat; und
(d) einen Beckengurt (5), der an einem ersten Ende einen Ankerpunkt (6) hat, der ausgebildet ist, um in geeigneter Weise auf einem Bodenniveau des Fahrzeugs und hinter der Person verankert zu werden, und der an einem zweiten Ende eine Stecklasche hat;
wobei der Sicherung-Freigabe-Aufnehmer (1) ausgebildet ist, um eine Koppelung und eine Entkoppelung mit den Stecklaschen des Schultergurtes (3) und des Beckengurtes (5) auszuführen, so dass die Koppelung unter Zugbelastung sicher halten wird und nach einer solchen Zugbelastung frei entkoppeln wird;
wobei der Verlängerungsgurt (2) ein ausreichendes Längenverhältnis hat, so dass der Sicherung-Freigabe-Aufnehmer (1) beim Gebrauch zur mittleren Front des unteren Rumpfes der Person hin angeordnet ist, und durch Sehen oder Fühlen leicht zu finden ist und zum Koppeln oder Entkoppeln leicht zu betätigten ist;
wobei das Entkoppeln der Stecklaschen des Schultergurtes (3) und des Beckengurtes (5) aus dem Sicherung-Freigabe-Aufnehmer (1) gestattet, dass der Schultergurt (3) und der Beckengurt (5) separat und unabhängig voneinander zurückgezogen werden, wodurch ein Verfangen der taktischen Ausrüstung vermieden wird; und
wobei der Sicherung-Freigabe-Aufnehmer (1) weiter eine drehbare Freigabesteuerung mit Teildrehung, einen internen Koppelungs- und Entkoppelungsmechanismus mit mindestens einem mittig angeordnetem Nocken oder einen internen Koppelungs- und Entkoppelungsmechanismus mit mindestens einer Klinke aufweist;
(ii) Installieren des Sitzgurtsystems (10) zur Anpassung an eine taktische Ausrüstung in einem Fahrzeug; und
(iii) Verwenden des Sitzgurtsystems (10) zur Anpassung an eine taktische Ausrüstung, wobei der Sicherung-Freigabe-Aufnehmer (1) zur mittleren Front des unteren Rumpfes der Person positioniert ist.

8. Verfahren für ein Sitzgurtsystem zur Anpassung an eine taktische Ausrüstung nach Anspruch 7, wobei das Sitzgurtsystems (10) zur Anpassung an eine taktische Ausrüstung weiter ausgebildet ist, um als ein Original-Sitzgurt ausgeführt zu werden, der in einem Neufahrzeug installiert ist.

9. Verfahren für ein Sitzgurtsystem zur Anpassung an eine taktische Ausrüstung nach Anspruch 7, wobei das Sitzgurtsystems (10) zur Anpassung an eine taktische Ausrüstung weiter ausgebildet ist, um als Nachrüstung für einen existierenden Standard-Dreipunkt-Sitzgurt ausgeführt zu werden.

10. Verfahren für ein Sitzgurtsystem zur Anpassung an eine taktische Ausrüstung nach Anspruch 7, wobei der Verlängerungsgurt (2) ausgebildet ist, um direkt an dem Boden des Fahrzeugs verankert zu werden.

11. Verfahren für ein Sitzgurtsystem zur Anpassung an eine taktische Ausrüstung nach Anspruch 7, wobei der Verlängerungsgurt (2) ausgebildet ist, um an einem Standard-Aufnehmer auf Sitzniveau angebracht zu werden, der wiederum am Boden des Fahrzeugs verankert ist.

12. Verfahren für ein Sitzgurtsystem zur Anpassung an eine taktische Ausrüstung nach Anspruch 7, wobei das Sitzgurtsystem (10) zur Anpassung an eine taktische Ausrüstung weiter aufweist, eine Verriegelungsrückzugsvorrichtung, einen Vorspanner oder eine Gewebeklemme an dem Schultergurt (3) oder an dem Beckengurt (5) vorzusehen.

13. Einrichtung eines Sitzgurtsystems (10) zur Anpassung an eine taktische Ausrüstung zur Verwendung in einem Fahrzeug durch eine Person, die eine taktische Ausrüstung an der Hüfte und am vorderen Rumpf trägt, wobei das Sicherheitsgurt- bzw. Sitzgurtsystem (10) zur Anpassung an eine taktische Ausrüstung Folgendes aufweist:
(i) einen Verlängerungsgurt (2), der ausgebildet ist, um letztendlich an einem ersten Ende an einem Boden des Fahrzeugs durch einen üblichen auf Sitzniveau befindlichen Aufnehmer oder anstelle von diesem verankert zu werden;
(ii) einen Sicherung-Freigabe-Doppelaufnehmer (1), der nicht verschiebbar an einem zweiten Ende des Verlängerungsgurtes (2) angebracht ist und zwei Aufnehmeranschlüsse hat;
(iii) einen Schultergurt (3), der an einem ersten Ende einen Ankerpunkt (4) hat, der ausgebildet ist, um in geeigneter Weise auf einem Schulterniveau und hinter der Person verankert zu werden, und der an einem zweiten Ende einen Steckanschluss hat; und
(iv) einen Beckengurt (5), der an einem ersten Ende einen Ankerpunkt (6) hat, der ausgebildet ist, um in geeigneter Weise auf einem Bodenniveau des Fahrzeugs und hinter der Person verankert zu werden, und der an einem zweiten Ende einen Steckanschluss hat;
wobei der Sicherung-Freigabe-Doppelaufnehmer (1) ausgebildet ist, um mit dem Steckanschluss des Schultergurtes (3) und des Beckengurtes (5) eine Koppelung und eine Entkoppelung auszuführen, so dass die Koppelung unter Zugbelastung sicher halten wird und nach einer solchen Zugbelastung frei entkoppeln wird;
wobei der Verlängerungsgurt (2) ein ausreichendes Längenverhältnis hat, so dass der Sicherung-Freigabe-Doppelaufnehmer (1) beim Gebrauch entfernt von einem Hüftbereich einer Person und zur mittleren Front des unteren Rumpfes der Person hin angeordnet ist, und durch Sehen oder Fühlen leicht zu finden ist und zum Koppeln oder Entkoppeln leicht zu betätigten ist.;
wobei das Entkoppeln des Steckanschlusses des Schultergurtes (3) und des Beckengurtes (5) aus dem Sicherung-Freigabe-Doppelaufnehmer (1) gestattet, dass der Schultergurt (3) und der Beckengurt (5) separat und unabhängig voneinander zurückgezogen werden, wodurch ein Verfangen der taktischen Ausrüstung vermieden wird; und
wobei der Sicherung-Freigabe-Doppelaufnehmer (1) weiter eine drehbare Freigabesteuerung mit Teildrehung, einen internen Koppelungs- und Entkoppelungsmechanismus mit mindestens einem mittig angeordnetem Nocken oder einen internen Koppelungs- und Entkoppelungsmechanismus mit mindestens einer Klinke aufweist.

14. Verfahren für ein Sitzgurtsystem zur Anpassung an eine taktische Ausrüstung zur Verwendung in einem Fahrzeug durch eine Person, die eine taktische Ausrüstung an Hüfte und vorderem Rumpf trägt, wobei das Verfahren für ein Sitzgurtsystem zur Anpassung an eine taktische Ausrüstung Folgendes aufweist:
(i) Vorsehen eines Sitzgurtsystems (10) zur Anpassung an eine taktische Ausrüstung, die Folgendes aufweist:
(a) einen Verlängerungsgurt (2), der ausgebildet ist, um letztendlich an einem ersten Ende an einem Boden des Fahrzeugs durch einen üblichen auf Sitzniveau befindlichen Aufnehmer oder anstelle von diesem verankert zu werden;
(b) einen Sicherung-Freigabe-Doppelaufnehmer (1), der nicht verschiebbar an einem zweiten Ende des Verlängerungsgurtes (2) angebracht ist und zwei Aufnehmeranschlüsse hat;
(c) einen Schultergurt (3), der an einem ersten Ende einen Ankerpunkt (4) hat, der ausgebildet ist, um in geeigneter Weise auf einem Schulterniveau und hinter der Person verankert zu werden, und der an einem zweiten Ende einen Steckanschluss hat; und
(d) einen Beckengurt (5), der an einem ersten Ende einen Ankerpunkt (6) hat, der ausgebildet ist, um in geeigneter Weise auf einem Bodenniveau des Fahrzeugs und hinter der Person verankert zu werden, und der an einem zweiten Ende einen Steckanschluss hat;
wobei der Sicherung-Freigabe-Doppelaufnehmer (1) ausgebildet ist, um eine Koppelung und eine Entkoppelung mit dem Steckanschluss des Schultergurtes (3) und des Beckengurtes (5) auszuführen, so dass die Koppelung unter Zugbelastung sicher halten wird und nach einer solchen Zugbelastung frei entkoppeln wird;
wobei der Verlängerungsgurt (2) ein ausreichendes Längenverhältnis hat, so dass der Sicherung-Freigabe- Doppelaufnehmer (1) beim Gebrauch entfernt vom Hüftbereich einer Person und zur mittleren Front des unteren Rumpfes der Person hin angeordnet ist, und durch Sehen oder Fühlen leicht zu finden ist und zum Koppeln oder Entkoppeln leicht zu betätigten ist;
wobei das Koppeln des Steckanschlusses des Schultergurtes (3) und des Beckengurtes (5) aus dem Sicherung-Freigabe-Doppelaufnehmer (1) gestattet, dass der Schultergurt (3) und der Beckengurt (5) separat und unabhängig voneinander zurückgezogen werden, wodurch ein Verfangen der taktischen Ausrüstung vermieden wird; und
wobei der Sicherung-Freigabe-Doppelaufnehmer (1) weiter eine drehbare Freigabesteuerung mit Teildrehung, einen internen Koppelungs- und Entkoppelungsmechanismus mit mindestens einem mittig angeordnetem Nocken oder einen internen Koppelungs- und Entkoppelungsmechanismus mit mindestens einer Klinke aufweist;
(ii) Installieren des Sitzgurtsystems (10) zur Anpassung an eine taktische Ausrüstung in einem Fahrzeug; und
(iii) Verwenden des Sitzgurtsystems (10) zur Anpassung an eine taktische Ausrüstung, wobei der Sicherung-Freigabe-Doppelaufnehmer (1) zur mittleren Front des unteren Rumpfes der Person positioniert ist.

## Revendications

1. Appareil de système de ceinture de sécurité recevant un équipement tactique (10) destiné à être utilisé dans un véhicule par une personne portant un équipement tactique à la taille et au torse avant, ledit système de ceinture de sécurité recevant un équipement tactique (10) comprenant :
(i) une sangle d'extension (2) adaptée pour être ancrée finalement au niveau d'une première extrémité à un plancher du véhicule au moyen ou à la place d'un réceptacle standard au niveau d'un siège ;
(ii) un réceptacle à libération sûre (1) fixé de façon non coulissante à une deuxième extrémité de ladite sangle d'extension (2) et ayant deux raccords de réceptacle ;
(iii) une bretelle (3) ayant au niveau d'une première extrémité un point d'ancrage (4) adapté pour être ancré approximativement au niveau de l'épaule et derrière la personne, et au niveau d'une deuxième extrémité une languette d'attache ; et
(iv) une sangle sous-abdominale (5) ayant au niveau d'une première extrémité un point d'ancrage (6) adapté pour être ancré approximativement au niveau du plancher du véhicule et derrière la personne, et au niveau d'une deuxième extrémité une languette d'attache ;
dans lequel ledit réceptacle à libération sûre (1) est adapté pour s'accoupler et se désaccoupler avec les languettes d'attache de ladite bretelle (3) et de ladite sangle sous-abdominale (5) de telle sorte que l'accouplement se maintienne solidement sous tension et se désaccouplera librement après une telle tension ;
dans lequel ladite sangle d'extension (2) a un aspect suffisamment longitudinal pour que le réceptacle à libération sûre (1), en cours d'utilisation, soit situé vers l'avant centre du torse inférieur de la personne, et soit facile à trouver à la vue ou au toucher, et facile à manipuler pour l'accouplement ou le désaccouplement ;
dans lequel le désaccouplement des languettes d'attache de ladite bretelle (3) et de ladite sangle sous-abdominale (5) avec ledit réceptacle à libération sûre (1) permet à ladite bretelle (3) et à ladite sangle sous-abdominale (5) d'être rétractées séparément et indépendamment l'une de l'autre, évitant ainsi d'accrocher l'équipement tactique ; et
dans lequel ledit réceptacle à libération sûre (1) comprend en outre une commande de libération à rotation partielle en rotation, un mécanisme interne d'accouplement et de désaccouplement ayant au moins une came située de façon centrale, ou un mécanisme interne d'accouplement et de désaccouplement ayant au moins un cliquet.

2. Appareil de système de ceinture de sécurité recevant un équipement tactique selon la revendication 1, adapté en outre pour être mis en œuvre sous forme d'une ceinture de sécurité d'origine installée dans un véhicule neuf.

3. Appareil de système de ceinture de sécurité recevant un équipement tactique selon la revendication 1, adapté en outre pour être mis en œuvre en tant que remplacement de mise à niveau d'une ceinture de sécurité à trois points standard existante.

4. Appareil de système de ceinture de sécurité recevant un équipement tactique selon la revendication 1, dans lequel ladite sangle d'extension (2) est adaptée pour être ancrée directement au plancher du véhicule.

5. Appareil de système de ceinture de sécurité recevant un équipement tactique selon la revendication 1, dans lequel ladite sangle d'extension (2) est adaptée pour être fixée à un réceptacle standard au niveau du siège qui est lui-même ancré au plancher du véhicule.

6. Appareil de système de ceinture de sécurité recevant un équipement tactique selon la revendication 1, comprenant en outre la fourniture d'un rétracteur de verrouillage, d'un prétensionneur, ou d'une pince à sangle sur ladite bretelle (3) ou sur ladite sangle sous-abdominale (5).

7. Procédé de ceinture de sécurité recevant un équipement tactique destiné à être utilisé dans un véhicule par une personne portant un équipement tactique à la taille et au torse avant, ledit procédé de système de ceinture de sécurité recevant un équipement tactique comprenant :
(i) la fourniture d'un système de ceinture de sécurité recevant un équipement tactique (10) comprenant :
(a) une sangle d'extension (2) adaptée pour être ancrée finalement au niveau d'une première extrémité à un plancher du véhicule au moyen ou à la place d'un réceptacle standard au niveau d'un siège ;
(b) un réceptacle à libération sûre (1) fixé de façon non coulissante à une deuxième extrémité de ladite sangle d'extension (2) et ayant deux raccords de réceptacle ;
(c) une bretelle (3) ayant au niveau d'une première extrémité un point d'ancrage (4) adapté pour être ancré approximativement au niveau de l'épaule et derrière la personne, et au niveau d'une deuxième extrémité une languette d'attache ; et
(d) une sangle sous-abdominale (5) ayant au niveau d'une première extrémité un point d'ancrage (6) adapté pour être ancré approximativement au niveau du plancher du véhicule et derrière la personne, et au niveau d'une deuxième extrémité une languette d'attache ;
dans lequel ledit réceptacle à libération sûre (1) est adapté pour s'accoupler et se désaccoupler avec les languettes d'attache de ladite bretelle (3) et de ladite sangle sous-abdominale (5) de telle sorte que l'accouplement se maintiendra solidement sous tension et se désaccouplera librement après une telle tension ;
dans lequel ladite sangle d'extension (2) a un aspect suffisamment longitudinal pour que le réceptacle à libération sûre (1), en cours d'utilisation, soit situé vers l'avant centre du torse inférieur de la personne, et soit facile à trouver à la vue ou au toucher, et facile à manipuler pour l'accouplement ou le désaccouplement ;
dans lequel l'accouplement des languettes d'attache de ladite bretelle (3) et de ladite sangle sous-abdominale (5) avec ledit réceptacle à libération sûre (1) permet à ladite bretelle (3) et à ladite sangle sous-abdominale (5) d'être rétractées séparément et indépendamment l'une de l'autre, évitant ainsi d'accrocher l'équipement tactique ; et
dans lequel ledit réceptacle à libération sûre (1) comprend en outre une commande de libération à rotation partielle en rotation, un mécanisme interne d'accouplement et de désaccouplement ayant au moins une came située de façon centrale, ou un mécanisme interne d'accouplement et de désaccouplement ayant au moins un cliquet ;
(ii) l'installation dudit système de ceinture de sécurité recevant un équipement tactique (10) dans un véhicule ; et
(iii) l'utilisation dudit système de ceinture de sécurité recevant un équipement tactique (10) avec le réceptacle à libération sûre (1) positionné vers l'avant centre du torse inférieur de la personne.

8. Procédé de système de ceinture de sécurité recevant un équipement tactique selon la revendication 7, dans lequel ledit système de ceinture de sécurité recevant un équipement tactique (10) est en outre adapté pour être mis en œuvre sous la forme d'une ceinture de sécurité d'origine installée dans un véhicule neuf.

9. Procédé de système de ceinture de sécurité recevant un équipement tactique selon la revendication 7, dans lequel ledit système de ceinture de sécurité recevant un équipement tactique (10) est en outre adapté pour être mis en œuvre en tant que remplacement de mise à niveau pour une ceinture de sécurité à trois points standard existante.

10. Procédé de système de ceinture de sécurité recevant un équipement tactique selon la revendication 7, dans lequel ladite sangle d'extension (2) est adaptée pour être ancrée directement au plancher du véhicule.

11. Procédé de système de ceinture de sécurité recevant un équipement tactique selon la revendication 7, dans lequel ladite sangle d'extension (2) est adaptée pour être fixée à un réceptacle standard au niveau du siège qui est lui-même ancré au plancher du véhicule.

12. Procédé de système de ceinture de sécurité recevant un équipement tactique selon la revendication 7, dans lequel ledit système de ceinture de sécurité recevant un équipement tactique (10) comprend en outre la fourniture d'un rétracteur de verrouillage, d'un prétensioneur, ou d'une pince à sangle sur ladite bretelle (3) ou sur ladite sangle sous-abdominale (5).

13. Appareil de système de ceinture de sécurité recevant un équipement tactique (10) destiné à être utilisé dans un véhicule par une personne portant un équipement tactique à la taille et au torse avant, ledit système de ceinture de sécurité recevant un équipement tactique (10) comprenant :
(i) une sangle d'extension (2) adaptée pour être ancrée finalement au niveau d'une première extrémité à un plancher du véhicule au moyen ou à la place d'un réceptacle standard au niveau d'un siège ;
(ii) un réceptacle double à libération sûre (1) fixé de façon non coulissante à une deuxième extrémité de ladite sangle d'extension (2) et ayant deux raccords de réceptacle ;
(iii) une bretelle (3) ayant au niveau d'une première extrémité un point d'ancrage (4) adapté pour être ancré approximativement au niveau de l'épaule et derrière la personne, et au niveau d'une deuxième extrémité un raccord de connecteur ; et
(iv) une sangle sous-abdominale (5) ayant au niveau d'une première extrémité un point d'ancrage (6) adapté pour être ancré approximativement au niveau du plancher du véhicule et derrière la personne, et au niveau d'une deuxième extrémité un raccord de connecteur ;
dans lequel ledit réceptacle double à libération sûre (1) est adapté pour s'accoupler et se désaccoupler avec les raccords de connecteur de ladite bretelle (3) et de ladite sangle sous-abdominale (5) de telle sorte que l'accouplement se maintiendra solidement sous tension et se désaccouplera librement après une telle tension ;
dans lequel ladite sangle d'extension (2) a un aspect suffisamment longitudinal pour que le réceptacle double à libération sûre (1) , en cours d'utilisation, soit situé loin d'une région de hanche d'une personne et vers l'avant centre du torse inférieur de la personne, et soit facile à trouver à la vue ou au toucher, et facile à manipuler pour l'accouplement ou le désaccouplement ; et
dans lequel le désaccouplement des raccords de connecteur de ladite bretelle (3) et de ladite sangle sous-abdominale (5) avec ledit réceptacle double à libération sûre (1) permet à ladite bretelle (3) et à ladite sangle sous-abdominale (5) d'être rétractées séparément et indépendamment l'une de l'autre, évitant ainsi d'accrocher l'équipement tactique ; et
dans lequel ledit réceptacle double à libération sûre (1) comprend en outre une commande de libération à rotation partielle en rotation, un mécanisme interne d'accouplement et de désaccouplement ayant au moins une came située de façon centrale, ou un mécanisme interne d'accouplement et de désaccouplement ayant au moins un cliquet.

14. Procédé de système de ceinture de sécurité recevant un équipement tactique destiné à être utilisé dans un véhicule par une personne portant un équipement tactique à la taille et au torse avant, ledit procédé de système de ceinture de sécurité recevant un équipement tactique comprenant :
(i) la fourniture d'un système de ceinture de sécurité à équipement tactique (10) comprenant :
(a) une sangle d'extension (2) adaptée pour être ancrée finalement au niveau d'une première extrémité à un plancher du véhicule au moyen ou à la place d'un réceptacle standard au niveau d'un siège ;
(b) un réceptacle double à libération sûre (1) fixé de façon non coulissante à une deuxième extrémité de ladite sangle d'extension (2) et ayant deux raccords de réceptacle ;
(c) une bretelle (3) ayant au niveau d'une première extrémité un point d'ancrage (4) adapté pour être ancré approximativement au niveau de l'épaule et derrière la personne, et au niveau d'une deuxième extrémité un raccord de connecteur ; et
(d) une sangle sous-abdominale (5) ayant au niveau d'une première extrémité un point d'ancrage (6) adapté pour être ancré approximativement au niveau du plancher du véhicule et derrière la personne, et au niveau d'une deuxième extrémité un raccord de connecteur ;
dans lequel ledit réceptacle double à libération sûre (1) est adapté pour s'accoupler et se désaccoupler avec les raccords de connecteur de ladite bretelle (3) et de ladite sangle sous-abdominale (5) de telle sorte que l'accouplement se maintiendra solidement sous tension et se désaccouplera librement après une telle tension ;
dans lequel ladite sangle d'extension (2) a un aspect suffisamment longitudinal pour que le réceptacle double à libération sûre (1) , en cours d'utilisation, soit situé loin d'une région de hanche d'une personne et vers l'avant centre du torse inférieur de la personne, et soit facile à trouver à la vue ou au toucher, et facile à manipuler pour l'accouplement ou le désaccouplement ;
dans lequel l'accouplement des raccords de connecteur de ladite bretelle (3) et de ladite sangle sous-abdominale (5) avec ledit réceptacle double à libération sûre (1) permet à ladite bretelle (3) et à ladite sangle sous-abdominale (5) d'être rétractées séparément et indépendamment l'une de l'autre, évitant ainsi d'accrocher l'équipement tactique ; et
dans lequel ledit réceptacle double à libération sûre (1) comprend en outre une commande de libération à rotation partielle en rotation, un mécanisme interne d'accouplement et de désaccouplement ayant au moins une came située de façon centrale, ou un mécanisme interne d'accouplement et de désaccouplement ayant au moins un cliquet ;
(ii) l'installation dudit système de ceinture de sécurité recevant un équipement tactique (10) dans un véhicule ; et
(iii) l'utilisation dudit système de ceinture de sécurité recevant un équipement tactique (10) avec le réceptacle à libération sûre (1) positionné vers l'avant centre du torse inférieur de la personne.
